**Europäisches Patentamt**

**European Patent Office**

**Office européen des brevets**

(19)

(11) Veröffentlichungsnummer: **0 191 727**
**B1**

(12) # EUROPÄISCHE PATENTSCHRIFT

(45) Veröffentlichungstag der Patentschrift:
12.10.88

(51) Int. Cl.⁴: **A 61 C 9/00, B 65 D 83/00**

(21) Anmeldenummer: **86810028.0**

(22) Anmeldetag: **20.01.86**

(54) Verfahren und Vorrichtung zur Bearbeitung von Zahnabdruckmaterial.

(30) Priorität: **15.02.85 CH 713/85**

(43) Veröffentlichungstag der Anmeldung:
**20.08.86 Patentblatt 86/34**

(45) Bekanntmachung des Hinweises auf die Patenterteilung:
**12.10.88 Patentblatt 88/41**

(84) Benannte Vertragsstaaten:
**DE FR GB IT NL SE**

(56) Entgegenhaltungen:
**DE-A-3 137 764**
**DE-A-3 226 835**
**FR-A-2 437 197**
**US-A-2 430 718**
**US-A-3 070 224**

(73) Patentinhaber: **Coltène AG, Feldwiesenstrasse 20,
CH- 9450 Altstätten (SG) (CH)**

(72) Erfinder: **Kiener, Alfons, Wiesenstrasse 13, CH-
9435 Heerbrugg (CH)**
Erfinder: **Kägi, Stefan, Dr., Naglerstrasse 11a, CH-
9443 Widnau (CH)**

(74) Vertreter: **Frauenknecht, Alois J., c/o PPS
Polyvalent Patent Service AG Mellingerstrasse
1, CH- 5400 Baden (CH)**

EP 0 191 727 B1

## Beschreibung

Die Erfindung betrifft ein Verfahren und eine Vorrichtung zur Bearbeitung von einem aus wenigstens zwei Komponenten bestehenden Zahnabdruckmaterial.

Für die Zubereitung von zahnärztlichem Abdruckmaterial, welches aus zwei Komponenten besteht, von denen die eine Komponente das Basismaterial und die andere die Katalysatormasse darstellen, sind verschiedene Verfahren bekannt.

Die anzuwendende Methode hängt im wesentlichen von der Viskosität der Masse ab und diese wiederum variiert bei den verschiedenen Herstellern. Die Wahl des Produktes wird weitgehend von der Abform- und der Abbindezeit abhängig gemacht.

Die Abformzeit beginnt vom Zeitpunkt der Herstellung der Mischung und endet mit dem Auftreten der ersten elastischen Eigenschaften der Masse, d. h. vom Beginn der Mischung bis zum Einbringen der Maße in den Mund. Danach beginnt die Abbindezeit, welche bis zum Erreichen der notwendigen Elastizität für die Abdruckentnahme reicht. Der Abdruck soll, ohne größere permanente Deformationen, aus dem Mund entnehmbar sein.

Schon ein verzögertes Einbringen der Masse in den Mund beeinflusst die Güte der Abbildung, vor allem der Abbildungsschärfe. Die Abbildungsschärfe ist aber auch von der individuellen Verarbeitungstechnik des Zahnarztes und seines Hilfspersonals abhängig.

Die wichtigsten Erfordernisse für eine optimale Mischung der Masse sind: Intensive, vollständige Durchmischung ohne Einmischen von Luftblasen und exakte Einhaltung der Mischzeiten.

Eine der am besten bekannten Methode zum Mischen eines Zahnabdruckmaterials ist die Mischung von zwei Pasten mittels eines Spatels auf einem Mischblock. Dazu werden zwei gleich lange Stränge aus einer Tube mit der Basismasse und einer zweiten Tube mit der Katalysatormaße nebeneinander auf einen Mischblock gedrückt. Beide Stränge werden zunächst grob mit dem Anmischspatel durch Flachstreichen der Massen vermischt. Durch abwechselndes Aufnehmen auf den Spatel und Abstreifen auf den Mischblock in ganz genau vorgeschriebenen Schritten und Zeiten wird eine homogene Mischung erzeugt. Diese Mischung wird anschliessend über einen Abdrucklöffel oder, nach Einfüllen in eine Spritze, direkt auf die Zähne aufgebracht. Dieses Verfahren ist für mittlere Viskositäten einer Masse von etwa 50000 mPa.s anwendbar; bei Viskositäten unter etwa 20000 mPa.s fliesst die Masse bereits vom Block.

Das bekannte Verfahren ist mit zahlreichen Nachteilen behaftet. Diese zeigen sich bereits beim Dosieren der Pasten, die nach den Vorschriften der Hersteller gleichmässig stark und mit gleicher Geschwindigkeit aus den Tuben auszudrücken sind, um immer gleiche Gewichts- und Volumenverhältnisse zu erzielen. Bei Verwendung einer Basismasse, welche mit einem Flüssighärter behandelt werden soll, müssen die Tropfen des Härters unmittelbar vor dem Anmischen genau abgezählt werden. Es darf beim Anmischen kein Tropfen verloren gehen, damit die optimale Konsistenz erreicht wird.

Es ist auch schon vorgeschlagen worden, bei Verwendung eines Flüssighärters und bei Viskositäten unter 20000 mPa.s in einem kalibrierten Becher zu mischen und die erhaltene Masse in eine Spritze zu füllen. Hierbei bleiben jedoch Schlieren an den Innenwänden des Bechers zurück. Die Viskosität der Masse steigt beim Anmischen so stark an, dass kostbare Arbeitszeiten aufgrund der Aushärtung im Becher und die anschliessend schwierige Entnahme aus dem Becher verloren gehen. Es resultieren Reste, die als Abfall anfallen (Die Quintessenz der zahnärztlichen Abformhilfsmittel, H.J. Rehberg, Buch- und Zeitschriftenverlag "Die Quintessenz", Berlin, 1978, 2. Aufl., S. 118 - 123).

Aufgabe der Erfindung ist es, ein Verfahren und eine Vorrichtung zu schaffen, welche eine intensive und vollständige Mischung einer Basismasse mit einer Katalysatormasse ohne Einmischung von Luft, unter Abkürzung der Mischungszeiten im geschlossenen System und unter sparsamem Umgang mit dem Zahnabdruckmaterial ermöglichen.

Die Aufgabe wird erfindungsgemäss dadurch gelöst, dass die Komponenten des Zahnabdruckmaterials im vorgeschriebenen Verhältnis in einen geöffneten Mischbehälter eingebracht werden, dass sie danach homogen mit einem Spatel mit Rundkanten, die der Form des Randes der Innenseite eines Bodens des Mischbehälters entsprechen, vermischt werden, dass der Mischbehälter mit einem Deckel geschlossen wird und dass die Mischung des Zahnabdruckmaterials durch einen Schub des beweglichen Bodens direkt aus demselben Mischbehälter durch eine Austrittsöffnung in einen Abdrucklöffel oder auf eine andere vorbestimmte Stelle appliziert wird.

Als Materialien für das erfindungsgemässe Verfahren haben sich vorzugsweise niedrigviskose Pasten auf Silikonbasis wie Coltex Fine, Coltex Extrafine, President light body mit ihren dazugehörigen Pasten und gelartigen Härtern (Marken der Coltène AG) als geeignet erwiesen. Es können aber auch Basismaterialien wie Xantropren (Marke der Bayer AG, BRD), Silasoft (Marke der Detax K. Huber, BRD) mit flüssigen Aktivatoren eingesetzt werden.

Die sofortige Vermischung der Basismasse mit dem Katalysator erlaubt sehr kurze und exakt einzuhaltende Mischungszeiten, vorzugsweise von weniger als einer Minute. Nach dem Verschliessen des Mischbehälters wird die Mischung nach Erreichen der gewünschten Homogenität auf den Abdrucklöffel und/ oder in die Aufsteckspritze, die auf den Behälter aufgesetzt ist, gebracht, was ohne Verzögerung geschieht. Somit entfällt auch das eventuelle Übertragen des Zahnabdruckmaterials von der Mischstelle in eine getrennt vorhandene Spritze.

Vorrichtung zur Durchführung des Verfahrens ist zweckmässig so ausgebildet, dass sie durch einen Mischbehälter gebildet ist, der zerlegbar aus einem rohrartigen Hohlkörper, aus einem in dem Hohlkörper verschiebbaren Boden und aus einem Deckel mit einer Austrittsöffnung zusammengesetzt ist und dass der Boden des Mischbehälters an seiner Innenseite mit einem erhöhten abstreiferartigen Rand versehen ist, der tote Räume verhindert. Dieser Behälter dient also sowohl als ein Behälter für das homogene Mischen der beiden Komponenten als auch zum Applizieren des Zahnabdruckmaterials. Die leichte Zerlegbarkeit der Vorrichtung ermöglicht eine bequeme und zuverlässige Reinigung der Bestandteile der Vorrichtung und eine schnelle Zusammensetzung der Teile für einen neuen Gebrauch. Der erhöhte Rand am Boden des Mischbehälters bewirkt, dass Totzonen während des Mischvorganges vermieden und Materialrückstände auf ein Minimum reduziert werden. Die Formen eines Rührspatels können mit gleicher Krümmung leicht an die Konturen des Bodens angepasst werden.

Es ist zweckmässig, wenn gemäss Anspruch 3 der Hohlkörper aus einem Zylinder mit einem an einer Stirnseite nach aussen gebördelten Rand und auf seiner anderen Stirnseite mit einem nach innen gebördelten Rand versehen ist. Diese Ränder dienen als Befestigungen oder Abstützmittel. Der mittlere Teil des Mischbehälters besteht aus einem Zylinder, dessen oberer Rand nach aussen gebördelt ist und exakt in eine entsprechende Aussparung eines Deckels passt. Der Vorteil liegt in einem rasch erzielbaren Klemmverschluss. Die unterseitige, nach innen gerichtete grössere Umbördelung dient zur Aufnahme des als Kolben dienenden Bodens. Die drei Teile sind so dimensioniert, dass ein rasches Zusammenfügen gewährleistet ist.

In einer Variante ist es gemäss Anspruch 4 zweckmässig, dass der Rand als ein in den Boden einsteckbarer Napf ausgebildet ist. Das hat den Vorteil, dass der Napf getrennt vom Bodenteil gereinigt oder als Einwegteil in wirtschaftlicher Weise einfach ersetzt werden kann.

Der Mittelteil des Bodens des Mischbehälters ist gemäß Anspruch 5 zweckmässigerweise mit Verstärkungen versehen, die eine leichte Bauweise mit grösster Stabilität und sicherer Führung im Hohlkörper ermöglichen. Diese Verstärkungen können durch radiale Rippen oder koaxiale Ringe oder Zylinder realisiert werden.

Gemäss Anspruch 6 ist der Deckel des Mischbehälters mit einer Austrittsspitze versehen, die schon bei der Herstellung des Deckels einstückig mit diesem hergestellt werden kann.

Die Austrittsspitze weist zweckmässig gemäss Anspruch 7 einen gegen die Öffnung verjüngten Teil auf. Diese Konstruktion erleichtert die Manipulation mit der erfindungsgemässen Vorrichtung. Die Verjüngung der Austrittsspitze hat den Vorteil, dass eine exakte Entleerung in den Abdrucklöffel unter gleichmässigem Druck und unter Vermeidung von Luftblasen erfolgen kann. Die Austrittsspitze dient auch zur Direktfüllung mit Korrekturmaterial in einen vorher applizierten Erstabdruck.

Nach einer weiteren Variante gemäss Anspruch 8 ist die Austrittsspitze mit einer auswechselbaren Aufsteckspritze versehen. Diese Aufsteckspritze kann sicher und rasch in ein Halteelement angebracht oder auf die Austrittsspitze aufgesteckt werden. Sie hält auf der Austrittsspitze friktionsdicht.

Zum raschen Öffnen oder Schliessen des Deckels ist es gemäss Anspruch 9 zweckmässig, diesen mit einer Klemmeinrichtung so zu versehen, dass zusätzliche Befestigungsmittel entfallen.

Die Abnahme des Deckels erfolgt gemäss Anspruch 10 in rascher und handlicher Weise mittels eines peripher angebrachten Druck- oder Hebelverschlusses, welcher so gross ist, dass er mit dem Daumen leicht weggedrückt werden kann.

Gemäss Anspruch 11 ist der Deckel auf der Aussenfläche mit einer ringförmigen Einbuchtung in Form einer Rille versehen. Diese Einbuchtung dient als Führung beim direkten Füllen eines Erstabdruckes. Sie ermöglicht die erforderliche Sicherheit beim Halten und Bedienen des Mischbehälters.

Gemäss Anspruch 12 ist der Mischbehälter vorteilhaft aus einem Kunststoff gefertigt. Es wird solches Material gewählt, das mit Wasser und Lösungsmitteln leicht zu reinigen ist und bei etwa 120° C bis 130° C mehrmals sterilisiert werden kann. Als am besten geeignet hat sich Polypropylen erwiesen. Geeignet sind aber auch andere Thermoplaste, welche eine gewisse Elastizität besitzen und mehrmaligen Temperaturerhöhungen während der Sterilisation im genannten Bereich für 20 bis 30 Minuten Dauer unbeschädigt widerstehen.

Gemäss Anspruch 13 ist es zweckmässig, als Material für die Herstellung wenigstens des Hohlkörpers des Mischbehälters einen durchsichtigen oder wenigstens opaken Kunststoff zu verwenden. Der Vorteil ist darin zu sehen, dass mit angebrachten Dosierstrichen die Füllhöhe des Mischbehälters kontrolliert werden kann.

Durch das Verhältnis von Durchmesser zur Höhe 1 : 1 bis 1 : 3 des Mischbehälters gemäss Anspruch 14 wirken die Scherkräfte beim Rühren zwischen dem Spatel und der Wand des Mischbehälters sehr günstig. In einer schlankeren Form ist eine Mischung in vertikaler Richtung ungenügend, da der Härter in der zur Verfügung stehenden Zeit nicht bis zum Boden des Mischbehälters gelangt; bei einem zu niedrigen Gefäß mit grossem Durchmesser ist die Mischarbeit nicht mehr ausreichend, um unter gleichen Bedingungen eine homogene Masse zu erhalten.

Die Erfindung wird anhand von Zeichnungen beispielhaft näher erläutert.

Es zeigen:

Fig. 1 einen Mischbehälter, wobei die linke Seite in Seitenansicht und die rechte Seite im teilweisen vertikalen Längsschnitt gezeichnet sind,

Fig. 2 a-c den Mischbehälter gemäss Fig. 1 in zerlegtem Zustand,

Fig. 3 eine Draufsicht auf den Deckel des Mischbehälters gemäß Fig. 1 und Fig. 2,

Fig. 4 einen Schnitt IV - IV durch den Boden des Mischbehälters nach Fig. 2c,

Fig. 5 einen Teil des Mischbehälters im Schnitt, wobei eine andere Art der Verbindung zwischen dem Deckel und dem Hohlkörper ausgebildet ist,

Fig. 6 einen Teil des Mischbehälters mit einem Spatel,

Fig. 7 eine Austrittsspitze mit Aufsteckspritze,

Fig. 8 eine Variante des Mischbehälters gemäss Fig. 1,

Fig. 9 einen Napf zum Mischbehälter,

Fig. 10 einen Boden mit radialen Verstärkungen und

Fig. 11 einen Schnitt XI - XI durch den Boden des Mischbehälters nach Fig. 10.

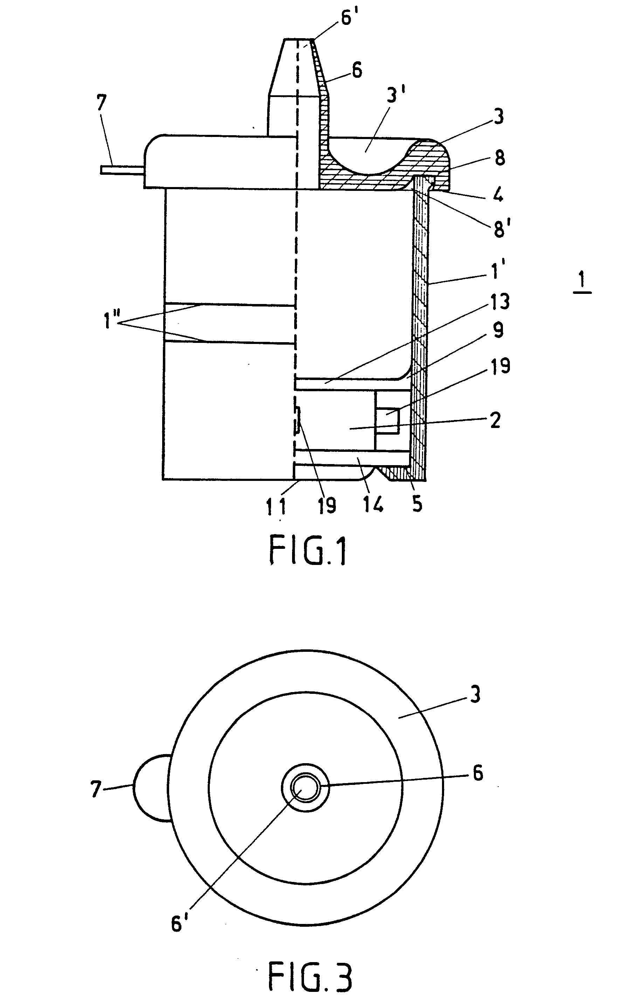

Gemäss Fig. 1 ist ein Mischbehälter mit 1 bezeichnet. Der Mischbehälter 1 besteht aus einem mittleren Teil in Form eines Hohlkörpers 1', einem Boden 2 und einem Deckel 3. Diese Teile sind gasdicht miteinander verbunden. Der Hohlkörper 1' besteht in seiner einfachsten Ausführung aus einem Kunststoffrohr, welches opak oder durchsichtig ist und dessen obere Stirnseite einen nach aussen gebördelten Rand 4 und dessen untere Stirnseite einen nach innen gebördelten Rand 5 aufweist. Der Deckel 3 ist mit einer ringförmigen Einbuchtung 3' versehen und ist einstückig mit einer Austrittsspitze 6 hergestellt. Der Deckel 3 trägt seitlich einen Hebel 7. Der Hohlkörper 1' ist in diesem Beispiel mit zwei Dosierstrichen 1'' versehen. Die Austrittsspitze 6 ist mit einer Austrittsöffnung 6' versehen. Am Rande des Deckels 3 ist eine Klemmeinrichtung 8 angeordnet, die in eine ringförmige Ausnehmung 8' eingeschoben werden kann. Da wenigstens der Deckel 3 aus einem elastischen Material besteht, erhält man durch die Klemmeinrichtung 8 eine luftdichte Verbindung zwischen dem Deckel 3 und dem Hohlkörper 1'. Der Boden 2 ist einstückig aus Kunststoff hergestellt. Eine Unterseite 11 des Bodens 2 ragt im dargestellten Zustand aus einer unteren Öffnung des Hohlkörpers 1' heraus. In einem Mittelteil 10 des Bodens 2 sind Verstärkungen 19 vorgesehen, die aus Kunststoff oder aus einem Metall bestehen können. Eine Innenseite 13 des Bodens 2 ist mit einem Rand 9 versehen, der sich nach oben als ein Abstreifer erhebt und dem inneren Teil der ringförmigen Ausnehmung 8' entspricht. Zwischen der Unterseite 11 des Bodens 2 und dem Mittelteil 10 dieses Bodens 2 ist ein Abstützring 14 angeordnet, der das Ausgleiten des Bodens 2 aus dem Hohlkörper 1' verhindert. Die massive Konstruktion des Bodens 2 sichert eine gute Führung im Hohlkörper 1'.

In allen Zeichnungen sind dieselben Teile mit gleichen Bezugzeichen versehen.

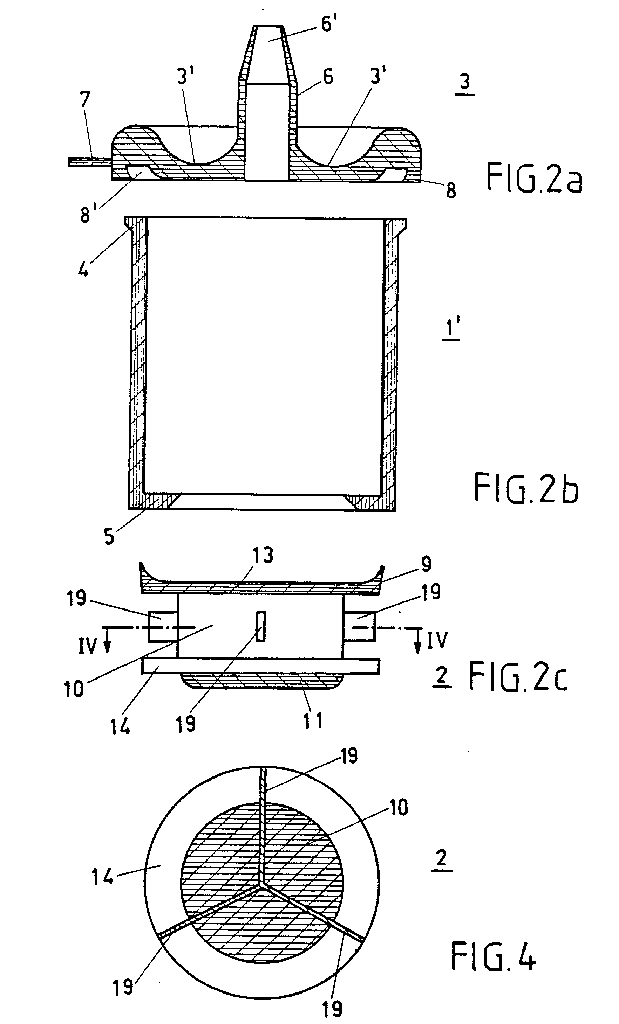

In den Fig. 2a bis 2c sind die einzelnen Teile des Mischbehälters 1 in zerlegtem Zustand dargestellt.

Gemäss Fig. 2a ist der aus Kunststoff gefertigte elastische Deckel 3 mit einem an seiner Peripherie eingebördelten Rand als Klemmeinrichtung 8 ausgebildet. Die Austrittsspitze 6 weist einen zylindrischen Teil auf, welcher mit dem Deckel 3 einstückig ist. Die Öffnung 6' verjüngt sich nach oben und auch das Material des konischen Teils der Austrittsspitze 6 wird dünner. Somit wird eine ausreichende Elastizität des Endes der Austrittsspitze erreicht.

Gemäss Fig. 2b weist der Hohlkörper 1' in seinem oberen Teil einen nach außen gebördelten Rand 4 auf, welcher in die Klemmeinrichtung 8 des Deckels 3 einzurasten vermag. Ein unterer, nach innen gebördelter Rand 5 dient zur Abstützung des Bodens 2.

Fig. 2c zeigt den Boden 2, der auf seiner Innenseite 13 mit einem nach oben gezogenen Rand 9 versehen ist. Der Mittelteil 10 des Bodens 2 trägt Verstärkungen 14 in Form von drei radialen Rippen. Die Unterseite 11 des Bodens 2 ist in Richtung nach unten konvex ausgebildet. Wie schon erwähnt, kann diese Unterseite 11 mit einer nicht dargestellten Stange versehen werden.

In Fig. 3 ist der Hebel 7 gezeigt, welcher am Deckel 3 angebracht oder mit dem Deckel 3 einstückig ausgebildet ist. Er erleichtert das Abheben des Deckels 3 vor der Befüllung und der Reinigung des Mischbehälters 1.

In Fig. 4 ist der Schnitt IV - IV aus der Fig. 2c dargestellt. Es sind drei aus Kunststoff oder Metall bestehende Rippen als Verstärkungen 14 gezeigt, die im Mittelteil 10 des Bodens 2 eingepresst sind.

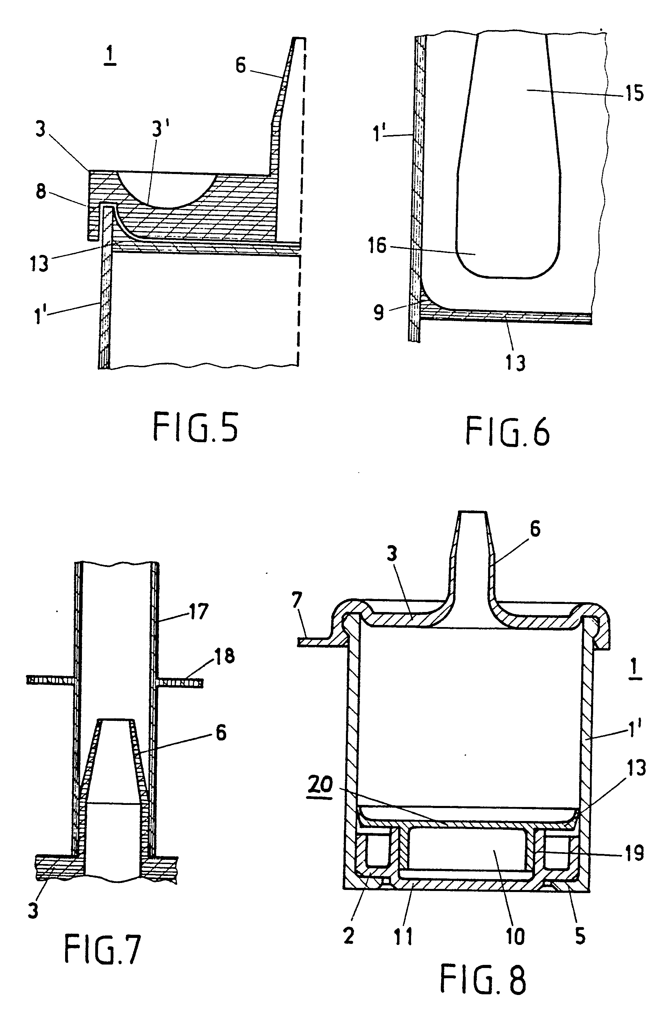

In Fig. 5 ist eine andere, einfachere Verbindung zwischen dem Deckel 3 und dem Hohlkörper 1' dargestellt. In diesem Beispiel weist der Hohlkörper 1' eine einfache zylindrische Form ohne einen gebördelten Rand auf.

Fig. 6 zeigt einen unteren Teil des Hohlkörpers 1' mit einem Spatel 15. Der Spatel 15 ist mit Rundkanten 16 versehen, die der Form des Randes 9 des Bodens 2 entsprechen und somit Totzonen zwischen dem Spatel 15 und dem Rand 9 des Bodens 2 verhindern. Wie in Fig. 5, ist auch in Fig. 6 der Boden 2 nur mit seiner Innenseite 13 eingezeichnet. Es besteht selbstverständlich die Möglichkeit, den Boden 2 so dünn herzustellen, wie es gezeichnet ist. In diesem Fall müsste man jedoch ein sehr festes Material verwenden, um die Deformation oder eine schiefe Lage des Bodens 2 vorzubeugen.

Fig. 7 zeigt eine Aufsteckspritze 17, die auf den konischen Teil der Austrittsspitze 6 aufgeschoben ist. Um mit dem Mischbehälter 1 und der Aufsteckspritze 17 einfacher manipulieren zu können, ist diese Aufsteckspritze 17 mit einer ringförmigen Halterung 18 versehen.

Fig. 8 stellt eine Variante des Mischbehälters 1 dar. Der Deckel 3 ist mit einer Austrittsspitze 6 und einem Hebel 7 versehen. Im zylindrischen Hohlkörper 1' ist ein verschiebbarer Bodenteil vorgesehen, welcher aus dem eigentlichen Boden 2 und einem aus diesem herausnehmbaren und verkeilbaren Napf 20 besteht. Der Boden 2 weist Verstärkungen 19 auf.

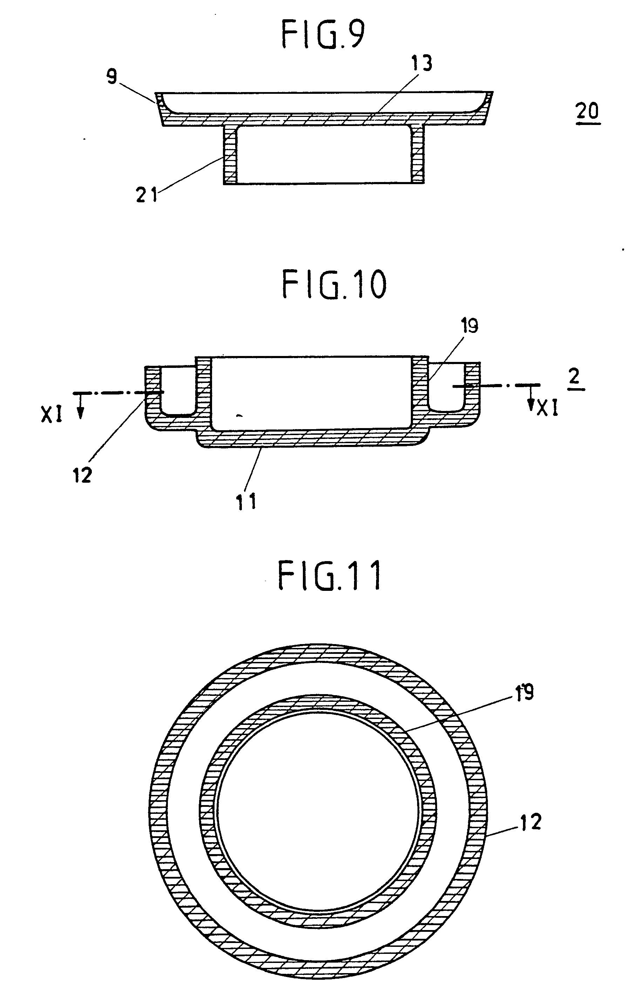

Nach Fig. 9 besteht der Napf 20 aus der Innenseite 13 mit dem nach oben gewölbten Rand 9 und einem nach einer Seite offenen Zylinder 21.

In Fig. 10 ist die Unterseite 11 des Bodens 2 becherförmig ausgebildet. Die zylindrischen Wände des Bechers bilden die Verstärkungen 19. Die Aussenseite 12 des Bodens 2 passt schlüssig in den Hohlkörper 1' (Fig. 8) und der Zylinder des Napfes 20 schliesst mit der Innenwand des Zylinders der Verstärkung 19 ebenfalls dicht ab.

In Fig. 11 ist der Schnitt XI - XI aus der Fig. 10 wiedergegeben. Der Boden 2 erhält sowohl durch die Verstärkung 19 als auch durch die Aussenseite 12 des Bodens 2 eine zusätzliche Stabilität.

Im betriebsbereiten Zustand sind der Deckel 3, der Hohlkörper 1' und der Boden 2 zum Mischbehälter 1 zusammengefügt, wie dies in der Fig. 1 gezeigt ist. Wenn wenigstens ein Hohlkörper 1' aus einem durchsichtigen oder opaken Material hergestellt ist, kann man die Dosierstriche 1'' beim Füllen des Basismaterials und des Härters nach dem Entfernen des Deckels 3 verwenden. Diese Materialien sind meistens als Paste oder Flüssigkeit vorhanden. Die mechanische Vermischung erfolgt mit dem Spatel 15 oder einer Mischgabel. Nach dem Erhalten einer homogenen Mischung, was meistens weniger als eine Minute erfordert, wird die am Spatel 15 verbliebene Masse auf der Innenseite des Hohlkörpers 1' abgestreift und der Deckel 3 mittels der peripheren Klemmeinrichtung 8 geschlossen. Die Entnahme der fertigen Mischung erfolgt durch einen Kolbenschub des beweglichen Bodens 2 an der als Unterseite 11 bezeichneten Stelle durch die Austrittsspitze 6 direkt auf einen Abdrucklöffel oder mittels der Aufsteckspritze 17 auf den dafür vorgesehenen Zahnbereich.

Das erfindungsgemässe Verfahren zeichnet sich besonders durch seine Genauigkeit, eine vollständige Durchmischung der Komponenten, seine Schnelligkeit und Sauberkeit aus.

Die erfindungsgemässe Vorrichtung hat den Vorteil, dass ein rascheres und somit wirtschaftlicheres Füllen eines Abdrucklöffels erfolgen kann, was schnelles und sauberes Arbeiten mit wenig Rückstand ermöglicht.

## Patentansprüche

1. Verfahren zur Bearbeitung von einem aus wenigstens zwei Komponenten bestehenden Zahnabdruckmaterial, dadurch gekennzeichnet, dass die Komponenten des Zahnabdruckmaterials im vorgeschriebenen Verhältnis in einen geöffneten Mischbehälter (1) eingebracht werden, dass sie danach homogen mit einem Spatel (15) mit Rundkanten (16), die der Form des Randes (9) der Innenseite (13) eines Bodens (2) des Mischbehälters (1) entsprechen, vermischt werden, dass der Mischbehälter (1) mit einem Deckel (3) geschlossen wird und dass die Mischung des Zahnabdruckmaterials durch einen Schub des beweglichen Bodens direkt aus demselben Mischbehälter (1) durch eine Austrittsöffnung (6') in einen Abdrucklöffel oder auf eine andere vorbestimmte Stelle appliziert wird.

2. Vorrichtung zur Durchführung des Verfahrens nach Anspruch 1, dadurch gekennzeichnet, dass sie durch einen Mischbehälter (1) gebildet ist, der zerlegbar aus einem rohrartigen Hohlkörper (1'), aus einem in dem Hohlkörper (1') verschiebbaren Boden (2) und aus einem Deckel (3) mit einer Austrittsöffnung (6') zusammengesetzt ist und dass der Boden (2) des Mischbehälters (1) an seiner Innenseite (13) mit einem erhöhten abstreiferartigen Rand (9) versehen ist, der tote Räume verhindert. (Fig. 1, Fig. 2).

3. Vorrichtung nach Anspruch 2, dadurch gekennzeichnet, dass der Hohlkörper (1') aus einem Zylinder mit einem an einer Stirnseite nach aussen gebördelten Rand (4) und auf seiner anderen Stirnseite mit einem nach innen gebördelten Rand (5) versehen ist. (Fig. 2b).

4. Vorrichtung nach Anspruch 2, dadurch gekennzeichnet, dass der Rand (9) als ein in den Boden (2) einsteckbarer Napf (20) ausgebildet ist (Fig. 9).

5. Vorrichtung nach Anspruch 2, dadurch gekennzeichnet, dass ein Mittelteil (10) des Bodens (2) des Mischbehälters (1) mit Verstärkungen (19) versehen ist (Fig. 4).

6. Vorrichtung nach Anspruch 2, dadurch gekennzeichnet, dass der Deckel (3) des Mischbehälters (1) mit einer Austrittsspitze (6) versehen ist. (Fig. 1).

7. Vorrichtung nach Anspruch 6, dadurch gekennzeichnet, dass die Austrittsspitze (6) gegen ihre Öffnung (6') verjüngt ist. (Fig. 1).

8. Vorrichtung nach Anspruch 6, dadurch gekennzeichnet, dass die Austrittsspitze (6) mit einer auswechselbaren Aufsteckspritze (17) versehen ist. (Fig. 7).

9. Vorrichtung nach Anspruch 2, dadurch gekennzeichnet, dass der Deckel (3) an seinem Umfang mit einer Klemmeinrichtung (8) versehen ist. (Fig. 1).

10. Vorrichtung nach Anspruch 2, dadurch gekennzeichnet, dass der Deckel (3) mit einem Hebel (7) versehen ist. (Fig. 1).

11. Vorrichtung nach Anspruch 2, dadurch gekennzeichnet, dass der Deckel (3) auf der Aussenfläche mit einer ringförmigen Einbuchtung (3') versehen ist. (Fig. 1).

12. Vorrichtung nach Anspruch 2, dadurch gekennzeichnet, dass der Mischbehälter (1) aus Kunststoff besteht (Fig. 1).

13. Vorrichtung nach Anspruch 12, dadurch gekennzeichnet, dass der Kunststoff wenigstens teilweise durchsichtig ist (Fig. 1).

14. Vorrichtung nach Anspruch 2, dadurch gekennzeichnet, dass der Mischbehälter (1) ein Verhältnis von Durchmesser zur Höhe 1 : 1 bis 1 : 3 aufweist. (Fig. 1).

## Claims

1. Method for working a dental mould material which consists of at least two constituents, characterised in that the constituents of the dental mould material are introduced in the prescribed ratio into an opened mixing container (1), and in that afterwards they are mixed homogeneously with a spatula (15) with round edges (16) which corresponds to the shape of the edge (9) of the inside (13) of a bottom (2) of the mixing container (1), and in that the mixing container (1) is closed by a lid (3), and in that the mixture of the dental mould material is applied by pushing the movable bottom directly out of the same mixing container (1) through an outlet opening (6') into a moulding spoon or onto another predetermined place.

2. Apparatus for performing the method according to claim 1, characterised in that it is constituted by a mixing container (1) which is capable of being disassembled and is composed of a tubular hollow member (1'), of a bottom (2) slidable in the hollow member (1'), and of a lid (3) with an outlet opening (6'); and in that the bottom (2) of the mixing container (1) is provided on its inside (13) with a raised scraper-like edge (9) which prevents the existence of dead spaces. (Fig. 1, Fig. 2).

3. Apparatus according to claim 2, characterised in that the hollow member (1') consists or a cylinder vith an edge (4) which is flanged towards the outside on one front side, and which is provided on its other front side with art inwardly flanged edge (5). (Fig. 2b).

4. Apparatus according to claim 2, characterised in that the edge (9) is constructed in the form of a cup (20) which can be inserted into the bottom (2). (Fig. 9).

5. Apparatus according to claim 2, characterised in that a central part (10) of the bottom (2) of the mixing container (1) is provided with reinforcing members (19). (Fig. 4).

6. Apparatus according to claim 2, characterised in that the lid (3) of the mixing container (1) is provided with an outlet tip (6). (Fig. 1).

7. Apparatus according to claim 6, characterised in that the outlet tip (6) is tapered towards its opening (6'). (Fig. 1).

8. Apparatus according to claim 2, characterised in that the outlet tip (6) is provided with an exchangeable fitted-on spray nozzle (17). (Fig. 7).

9. Apparatus according to claim 2, characterised in that the lid (3) is provided on its circumference with a clamping arrangement (8). (Fig. 1).

10. Apparatus according to claim 2, characterised in that the lid (3) is provided with a lever (7). (Fig. 1).

11. Apparatus according to claim 2, characterised in that the lid (3) is provided on the outside surface with a ring shaped recess (3'). (Fig. 1).

12. Apparatus according to claim 2, characterised in that the mixing container (1) is made of synthetic plastics material. (Fig. 1).

13. Apparatus according to claim 12, characterised in that the synthetic plastics material is at least partially transparent. (Fig. 1).

14. Apparatus according to claim 2, characterised in that the mixing container (1) has a ratio of diameter to height 1 : 1 to 1 : 3. (Fig. 1).

## Revendications

1. Procédé pour travailler les composants de pris d'empreintes dentaires contenant au moins deux composants, caractérisé en ce que les composants du matériau de prise d'empreintes dentaires sont introduits dans des proportions prescrites dans un récipient mélangeur (1) ouvert qu'ils sont ensuite mélangés de manière homogène avec une spatule (15) avec des arêtes arrondies (16) lesquelles correspondent à la forme du bord (9) de la face intérieure (13) d'un fond (2) du récipient mélangeur (1); que le récipient mélangeur (1) est fermé avec un couvercle (3); et que le mélange des composants de prise d'empreintes dentaires est appliqué directement, par le déplacement du fond mobile, au travers d'une ouverture de sortie (6'), du récipient mélangeur (1) dans une cuiller de prise d'empreintes ou à un autre endroit prédéterminé.

2. Dispositif pour la mise en oeuvre du procédé selon la revendication 1, caractérisé en ce qu'il comprend un récipient mélangeur (1) assemblé de manière démontable à partir d'un corps creux (1') en forme de tube, d'un fond (2) déplaçable à l'intérieur du corps creux (1') et d'un couvercle (3) avec une ouverture de sortie (6'); et que le fond (2) du récipient mélangeur (1) est muni à sa face intérieure (13) d'un rebord (9) relevé en forme de racle lequel empêche la formation de zones mortes (fig. 1, fig. 2).

3. Dispositif selon la revendication 2, caractérisé en ce que le corps creux (1') se compose d'un cylindre qui est muni, à l'une des faces frontales, d'un bord (4) rabattu vers l'extérieur et, à l'autre face frontale, d'un bord (5) rabattu vers l'intérieur (fig. 2b).

4. Dispositif selon la revendication 2, caractérisé en ce que le rebord (9) est conformé en cuvette (20) pouvant être emboîtée dans le fond (2) (fig. 9).

5. Dispositif selon la revendication 2, caractérisé en ce qu'une partie centrale (10) du fond (2) du récipient mélangeur (1) est munie de raidisseurs (19) (fig. 4).

6. Dispositif selon la revendication 2, caractérisé en ce que le couvercle (3) du récipient mélangeur (1) comporte une pointe de sortie (6) (fig. 1).

7. Dispositif selon la revendication 6, caractérisé en ce que la pointe de sortie (6) se rétrécit en direction de son ouverture (6') (fig. 1).

8. Dispositif selon la revendication 6, caractérisé en ce que la pointe de sortie (6) est munie d'une seringue emboîtable (17) interchangeable (fig. 7).

9. Dispositif selon la revendication 2, caractérisé en ce que le couvercle (3) est muni sur sa périphérie d'un système de serrage (8) (fig. 1).

10. Dispositif selon la revendication 2, caractérisé en ce que le couvercle (3) est muni d'un levier (7) (fig. 1).

11. Dispositif selon la revendication 2, caractérisé en ce que le couvercle (3) présente sur la face extérieure une dépression annulaire (3') (fig. 1).

12. Dispositif selon la revendication 2, caractérisé en ce que le récipient mélangeur (1) est réalisé en matière plastique (fig. 1).

13. Dispositif selon la revendication 12, caractérisé en ce que la matière plastique est du moins partiellement transparente (fig. 1).

14. Dispositif selon la revendication 2, caractérisé en ce que le récipient mélangeur (1) présente un rapport entre le diamètre et la hauteur de 1 : 1 à 1 : 3 (fig. 1).

FIG.1

FIG.3

FIG.2a

FIG.2b

FIG.2c

FIG.4

FIG.5

FIG.6

FIG.7

FIG.8

# FIG.9

9               13

20

21

# FIG.10

19

XI

2

XI

12

11

# FIG.11

19

12